# EUROPEAN PATENT APPLICATION

(11) **EP 2 120 408 A1**
(43) Date of publication of application: **18.11.2009**
(21) Application number: 09153449.5
(22) Date of filing: 23.02.2009
(51) Int. Cl.: H04L 12/58

(54) **System and method for updating instant messaging conversations**

(30) Priority: 09.05.2008 US 52036 P
(71) Applicant: Research In Motion Limited, Waterloo, Ontario N2L 3W8 (CA)
(72) Inventor: Hung, Michael, Toronto Ontario M6S 1Y5 (CA); Khan, Tabarak, Oakville Ontario L6J 6Z5 (CA)
(74) Representative: Rickard, David John

(57) **Abstract**

A system and method are provided for updating multiple active conversations in an instant messaging application. A menu item may be provided that, when selected enables the user to enter a common message that, when sent is applied to each of the active conversations. This allows the user to convey the same information to multiple parties, e.g. when they suddenly become unavailable. The user may also use one or more default messages to further speed up the process.

## Description

The following relates generally to updating instant messaging conversations.

Devices that are capable of sending and receiving data such as email may also be used for instant messaging. Multiple instant messaging sessions or 'conversations' may be initiated in order to communicate with multiple correspondents or 'buddies'. As a result, instant messaging can enable a user to carry on several conversations at the same time. This can be particularly useful where a user wishes to, and is able to, have several ongoing discussions where their undivided attention is not required.

Communicating with multiple buddies involves navigating between different conversation windows and reading and replying to new messages on an ongoing basis. Handling multiple conversations in parallel can be difficult to manage. For example, when instant messaging on a mobile device, such navigation can be awkward given the often limited display size of a mobile device.

### GENERAL

There may be provided a method, computer readable medium, and mobile device for updating instant messaging conversations by upon receiving a first input, providing an option for sending a common message to a plurality of active conversations; upon receiving a second input indicating selection of the option, enabling the provision of the common message; and upon receiving a third input confirming the common message, sending the common message to the plurality of active conversations.

### BRIEF DESCRIPTION OF THE DRAWINGS

Embodiments will now be described by way of example only with reference to the appended drawings wherein:

Figure 1 is a system diagram illustrating the environment in which data items are pushed from a host system to a mobile device.

Figure 2 is a schematic diagram of a mobile device and a display screen therefor.

Figure 3 is a schematic diagram of another mobile device and a display screen therefor.

Figure 4 is a block diagram of an exemplary embodiment of a mobile device.

Figure 5 is a block diagram of an exemplary embodiment of a communication subsystem component of the mobile device of Figure 3.

Figure 6 is a screen shot of a home screen displayed by the mobile device.

Figure 7 is a block diagram illustrating exemplary ones of the other software applications and components shown in Figure 4.

Figure 8 is a system diagram showing one configuration for instant messaging on multiple platforms.

Figure 9 is a block diagram illustrating components of an instant messaging application used by a mobile device.

Figures 10(a) through 10(g) are a series of exemplary screen shots illustrating use of a Message All option in an instant messaging application.

Figure 10(h) is a screen shot illustrating a default menu for selecting a default message for the Message All option exemplified in Figures 10(a) through 10(g).

Figure 11(a) is a screen shot similar to Figure 10(c) comprising a link to a preferences menu.

Figure 11(b) is a screen shot illustrating a preferences menu for the Message All option.

Figure 12 is a flow diagram illustrating an example of operations performed by an instant messaging application in utilizing the Message All option.

### DESCRIPTION OF PREFERRED EMBODIMENTS

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

While engaged in one or more instant messaging conversations, a user may encounter situations where they cannot participate, at least temporarily. In such situations, the user may wish to notify the buddies they are communicating with that they need to end or put on hold the conversation. Traditionally, when participating in multiple instant messaging sessions, the user can open each conversation separately and prepare and send a separate message to each buddy. When engaged in multiple conversations, this can be time consuming. Alternatively, the user can simply switch their status to 'inactive' or 'away'. However, this approach may be considered abrupt since the other users would be given an indirect notification of the change in status.

Rather than separately notifying each buddy in each conversation or abruptly changing status, an option can be included in the instant messaging application that enables the user to choose or prepare a message and apply this message commonly across all or a selected number of conversations at the same time. In this way, the buddies receive what appears to be a personal message ending the conversation and the user does not need to do this separately for each conversation.

In one embodiment, as will be explained below, the user may be presented with a Message All option in a menu that, when selected, enables the user to enter a common message that they wish to send to all active conversations, e.g. to indicate that they are leaving the conversation. The common message, once entered is then sent to all or a selected number of active conversations without requiring each conversation to be accessed. In another embodiment, the user may be presented with the opportunity to choose from one or more default messages in the Message All option to further speed up the process, if one of such default messages is applicable. In yet another embodiment, the user has the ability to define which of the active conversations will receive the common message, e.g. only those active within a specified time window, those the user wishes to always receive the common message, or those the user wishes to never receive the common message.

Although the following examples are presented in the context of mobile communication devices, the principles may equally be applied to other devices such as applications running on personal computers and the like.

For clarity in the discussion below, communication devices will be commonly referred to as "mobile devices". Examples of applicable mobile devices include pagers, cellular phones, cellular smart-phones, wireless organizers, personal digital assistants, computers, laptops, handheld wireless communication devices, wirelessly enabled notebook computers and the like.

The mobile device is a two-way communication device with advanced data communication capabilities including the capability to communicate with other mobile devices or computer systems through a network of transceiver stations. The mobile device may also have the capability to allow voice communication. Depending on the functionality provided by the mobile device, it may be referred to as a data messaging device, a two-way pager, a cellular telephone with data messaging capabilities, a wireless Internet appliance, or a data communication device (with or without telephony capabilities).

The mobile device may be one that is used in a system that is configured for continuously routing all forms of pushed information from a host system to the mobile device. One example of such a system will now be described.

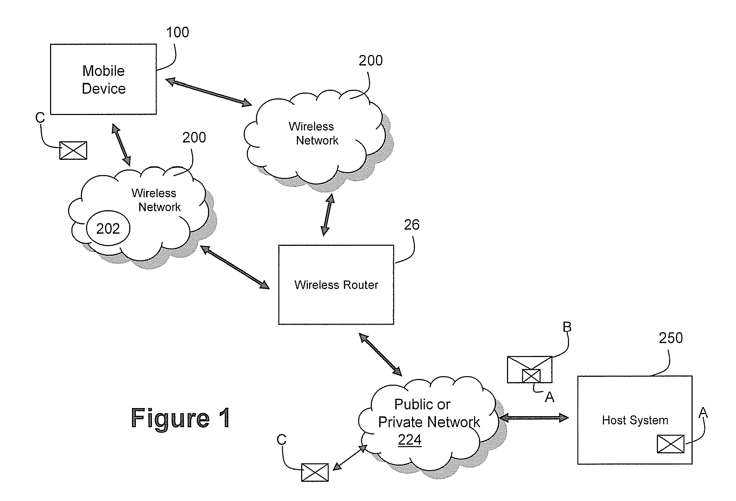

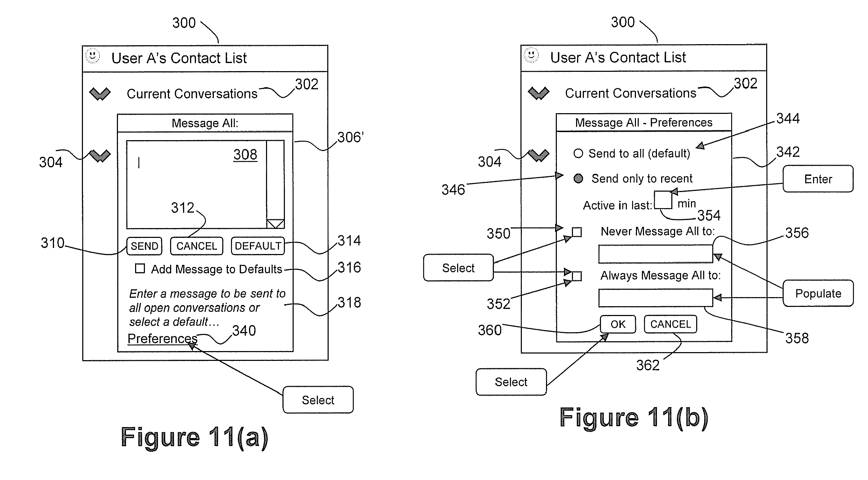

Referring now to the drawings, Figure 1 is an example system diagram showing the redirection of user data items (such as message A or C) from a corporate enterprise computer system (host system) 250 to the user's mobile device 100 via a wireless router 26. The wireless router 26 provides the wireless connectivity functionality as it acts to both abstract most of the wireless network's 200 complexities, and it also implements features necessary to support pushing data to the mobile device 100. Although not shown, a plurality of mobile devices may access data from the host system 250. In this example, message A in Figure 1 represents an internal message sent from, e.g. a desktop computer 262 within the host system 250 (see Figure 11), to any number of server computers in the corporate network 260 (e.g. LAN), which may, in general, include a database server, a calendar server, an E-mail server or a voice-mail server. More detail concerning the host system 250 will be provided below and is shown in Figure 11 as noted above.

Message C in Figure 1 represents an external message from a sender that is not directly connected to the host system 250, such as the user's mobile device 100, some other user's mobile device (not shown), or any user connected to the public or private network 224 (e.g. the Internet). Message C could be e-mail, voice-mail, calendar information, database updates, web-page updates or could even represent a command message from the user's mobile device 100 to the host system 250. The host system 250 may comprise, along with the typical communication links, hardware and software associated with a corporate enterprise computer network system, one or more wireless mobility agents, a TCP/IP connection, a collection of data stores, (for example a data store for e-mail could be an off-the-shelf mail server like Microsoft Exchange® Server or Lotus Notes® Server), all within and behind a corporate firewall as will be explained further below.

The mobile device 100 may be adapted for communication within wireless network 200 via wireless links, as required by each wireless network 200 being used. As an illustrative example of the operation for a wireless router 26 shown in Figure 1, consider a data item A, repackaged in outer envelope B (the packaged data item A now referred to as "data item (A)") and sent to the mobile device 100 from an Application Service Provider (ASP) in the host system 250. Within the ASP is a computer program, similar to a wireless mobility agent, running on any computer in the ASP's environment that is sending requested data items from a data store to a mobile device 100. The mobile-destined data item (A) is routed through the network 224, and through a firewall protecting the wireless router 26.

Although the above describes the host system 250 as being used within a corporate enterprise network environment, this is just one embodiment of one type of host service that offers push-based messages for a handheld wireless device that is capable of notifying and preferably presenting the data to the user in real-time at the mobile device when data arrives at the host system.

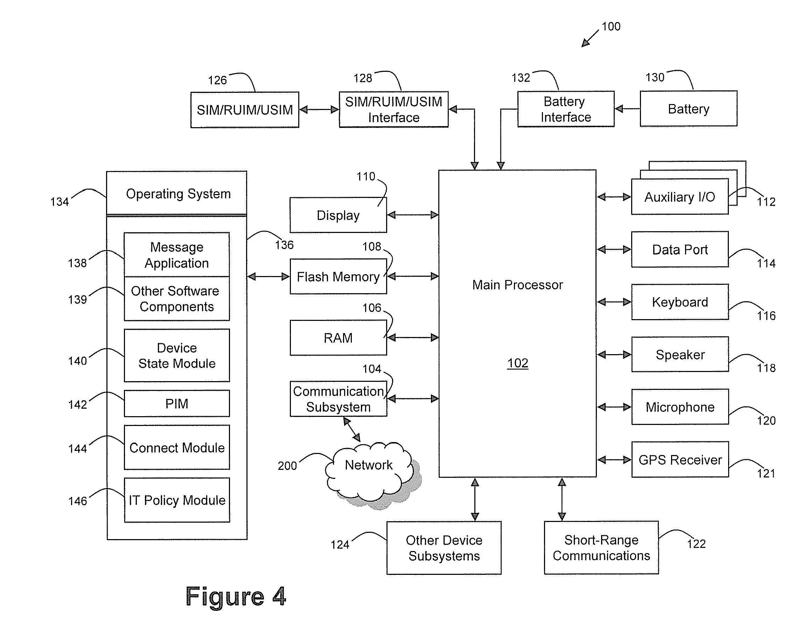

By offering a wireless router 26 (sometimes referred to as a "relay"), there are a number of major advantages to both the host system 250 and the wireless network 200. The host system 250 in general runs a host service that is considered to be any computer program that is running on one or more computer systems. The host service is said to be running on a host system 250, and one host system 250 can support any number of host services. A host service may or may not be aware of the fact that information is being channelled to mobile devices 100. For example an e-mail or message program 138 (see Figure 4) might be receiving and processing e-mail while an associated program (e.g. an e-mail wireless mobility agent) is also monitoring the mailbox for the user and forwarding or pushing the same e-mail to a wireless device 100. A host service might also be modified to prepare and exchange information with mobile devices 100 via the wireless router 26, like customer relationship management software. In a third example, there might be a common access to a range of host services. For example a mobility agent might offer a Wireless Access Protocol (WAP) connection to several databases.

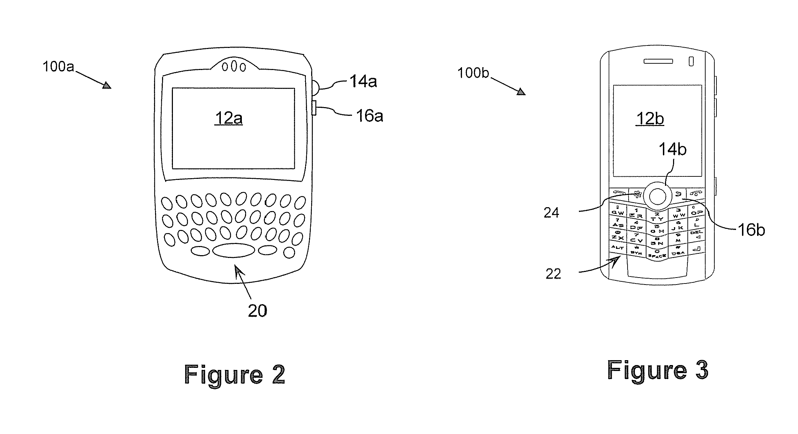

As discussed above, a mobile device 100 may be a hand-held two-way wireless paging computer as exemplified in Figures 2-7, a wirelessly enabled palm-top computer, a mobile telephone with data messaging capabilities, a PDA with mobile phone capabilities, a wirelessly enabled laptop computer, a vending machine with an associated OEM radio modem, a wirelessly-enabled heart-monitoring system or, alternatively, it could be other types of mobile data communication devices capable of sending and receiving messages via a network connection. Although the system is exemplified as operating in a two-way communications mode, certain aspects of the system could be used in a "one and one-half" or acknowledgment paging environment, or even with a one-way paging system. In such limited data messaging environments, the wireless router 26 still could abstract the mobile device 100 and wireless network 200, offer push services to standard web-based server systems and allow a host service in a host system 250 to reach the mobile device 100 in many countries.

The host system 250 shown herein has many methods when establishing a communication link to the wireless router 26. For one skilled in the art of data communications the host system 250 could use connection protocols like TCP/IP, X.25, Frame Relay, ISDN, ATM or many other protocols to establish a point-to-point connection. Over this connection there are several tunneling methods available to package and send the data, some of these include: HTTP/HTML, HTTP/XML, HTTP/Proprietary, FTP, SMTP or some other proprietary data exchange protocol. The type of host systems 250 that might employ the wireless router 26 to perform push could include: field service applications, e-mail services, stock quote services, banking services, stock trading services, field sales applications, advertising messages and many others. This wireless network 200 abstraction is made possible by the wireless router 26, which implements this routing and push functionality. The type of user-selected data items being exchanged by the host could include: E-mail messages, calendar events, meeting notifications, address entries, journal entries, personal alerts, alarms, warnings, stock quotes, news bulletins, bank account transactions, field service updates, stock trades, heart-monitoring information, vending machine stock levels, meter reading data, GPS data, etc., but could, alternatively, include any other type of message that is transmitted to the host system 250, or that the host system 250 acquires through the use of intelligent agents, such as data that is received after the host system 250 initiates a search of a database or a website or a bulletin board.

The wireless router 26 provides a range of services to make creating a push-based host service possible. These networks may comprise: (1) the Code Division Multiple Access (CDMA) network, (2) the Groupe Special Mobile or the Global System for Mobile Communications (GSM) and the General Packet Radio Service (GPRS), and (3) the upcoming third-generation (3G) and fourth generation (4G) networks like EDGE, UMTS and HSDPA, LTE, Wi-Max etc. Some older examples of data-centric networks include, but are not limited to: (1) the Mobitex Radio Network ("Mobitex") and (2) the DataTAC Radio Network ("DataTAC").

To be effective in providing push services for host systems 250, the wireless router 26 may implement a set of defined functions. It can be appreciated that one could select many different hardware configurations for the wireless router 26, however, many of the same or similar set of features would likely be present in the different configurations. The wireless router 26 may offer any one or more of the following features for host services: 1) An addressing method so that mobile device 100 traffic can be addressed to a host system 250 without the need for the wireless network 200 to assign an identity to each host system 250; 2) An efficient and authenticated method for the host system 250 to initiate a communication connection to the wireless router 26 for the purposes of opening a communication tunnel to the one or more mobile devices 100 that the host system 250 wishes to communicate with; 3) A reliable method for exchanging data between the host system 250 and the mobile device 100, in a manner consistent with the abilities of the wireless network 200; 4) Providing feedback to the host system 250 when data is delivered, which allows the host system to clean up any wireless delivery queues if necessary, or inform the original sender (user or program) that the data has been delivered to the mobile device 100; 5) Implementation of a wireless network 200 initiated push of services or data to a mobile device 100, from a wireless router 26; and 6) Connect to a wide range of wireless networks 200 and provide a way of tracking the user's location so that a 'follow you anywhere' solution can be provided.

Referring now to Figures 2 and 3, one embodiment of a mobile device 100a is shown in Figure 2, and another embodiment of a mobile device 100b is shown in Figure 3. It will be appreciated that the numeral "100" will hereinafter refer to any mobile device 100, including the embodiments 100a and 100b, those embodiments enumerated above or otherwise. It will also be appreciated that a similar numbering convention may be used for other general features common between Figures 2 and 3 such as a display 12, a positioning device 14, and a cancel or escape button 16.

The mobile device 100a shown in Figure 2 comprises a display 12a and the cursor or view positioning device 14 shown in this embodiment is a positioning wheel 14a. Positioning device 14 may serve as another input member and is both rotatable to provide selection inputs to the main processor 102 (see Figure 4) and can also be pressed in a direction generally toward housing to provide another selection input to the processor 102. The display 12 may include a selection cursor 18 that depicts generally where the next input or selection will be received. The selection cursor 18 may comprise a box, alteration of an icon or any combination of features that enable the user to identify the currently chosen icon or item. The mobile device 100a in Figure 2 also comprises an escape or cancel button 16a and a keyboard 20. In this example, the keyboard 20 is disposed on the front face of the mobile device housing and positioning device 14 and cancel button 16a are disposed at the side of the housing to enable a user to manoeuvre the positioning wheel 16a while holding the mobile device 100 in one hand. The keyboard 20 is, in this embodiment, a standard QWERTY keyboard.

The mobile device 100b shown in Figure 3 comprises a display 12b and the positioning device 14 in this embodiment is a trackball 14b. Trackball 14b permits multi-directional positioning of the selection cursor 18 such that the selection cursor 18 can be moved in an upward direction, in a downward direction and, if desired and/or permitted, in any diagonal direction. The trackball 14b is preferably situated on the front face of a housing for mobile device 100b as shown in Figure 3 to enable a user to manoeuvre the trackball 14b while holding the mobile device 100b in one hand. The trackball 14b may serve as another input member (in addition to a directional or positioning member) to provide selection inputs to the processor 102 and can preferably be pressed in a direction towards the housing of the mobile device 100b to provide such a selection input.

The mobile device 100b also comprises a menu or option button 24 that loads a menu or list of options on display 12b when pressed, and a cancel or escape button 16b to exit, "go back" or otherwise escape from a feature, option, selection or display. The mobile device 100b as illustrated in Figure 3, comprises a reduced QWERTY keyboard 22. In this embodiment, the keyboard 22, positioning device 14, escape button 16b and menu button 24 are disposed on a front face of a mobile device housing. The reduced QWERTY keyboard 22 comprises a plurality of multi-functional keys and corresponding indicia including keys associated with alphabetic characters corresponding to a QWERTY array of letters A to Z and an overlaid numeric phone key arrangement.

It will be appreciated that for the mobile device 100, a wide range of one or more positioning or cursor/view positioning mechanisms such as a touch pad, a joystick button, a mouse, a touchscreen, set of arrow keys, a tablet, an accelerometer (for sensing orientation and/or movements of the mobile device 100 etc.), or other whether presently known or unknown may be employed. Similarly, any variation of keyboard 20, 22 may be used. It will also be appreciated that the mobile devices 100 shown in Figures 2 and 3 are for illustrative purposes only and various other mobile devices 100 are equally applicable to the following examples. For example, other mobile devices 100 may include the trackball 14b, escape button 16b and menu or option button 24 similar to that shown in Figure 3 only with a full or standard keyboard of any type. Other buttons may also be disposed on the mobile device housing such as colour coded "Answer" and "Ignore" buttons (not shown) to be used in telephonic communications. In another example, the display 12 may itself be touch sensitive thus itself providing an input mechanism in addition to display capabilities.

Movement, navigation, and/or scrolling with use of a cursor/view positioning device 14 (e.g. trackball 14b or positioning wheel 14a) is beneficial given the relatively large size of visually displayed information and the compact size of display 12, and since information and messages are typically only partially presented in the limited view of display 12 at any given moment. As previously described, positioning device 14 - positioning wheel 14a and trackball 14b, are helpful cursor/view positioning mechanisms to achieve such movement. Positioning device 14, which may be referred to as a positioning wheel or scroll device 14a in one embodiment (Figure 2), specifically includes a circular disc which is rotatable about a fixed axis of housing and may be rotated by the end user's index finger or thumb. As noted above, in another embodiment (Figure 3) the trackball 14b comprises a multi-directional member that enables upward, downward and if desired, diagonal movements. The multi-directional movements afforded, in particular, by the trackball 14b and the presentation of icons and folders on display 12 provides the user with flexibility and familiarity of the layout of a traditional desktop computer interface. Also, the positioning device 14 enables movement and selection operations to be executed on the mobile device 10 using one hand. The trackball 14b in particular also enables both one-handed use and the ability to cause a cursor 18 to traverse the display 12 in more than one direction.

To aid the reader in understanding the structure of the mobile device 100 and how it communicates with the wireless network 200, reference will now be made to Figures 4 through 7.

Referring first to Figure 4, shown therein is a block diagram of an exemplary embodiment of a mobile device 100. The mobile device 100 comprises a number of components such as a main processor 102 that controls the overall operation of the mobile device 100. Communication functions, including data and voice communications, are performed through a communication subsystem 104. The communication subsystem 104 receives messages from and sends messages to a wireless network 200. In this exemplary embodiment of the mobile device 100, the communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by 3G and 4G networks such as EDGE, UMTS and HSDPA, LTE, Wi-Max etc. New standards are still being defined, but it is believed that they will have similarities to the network behaviour described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM/GPRS communications. With newer network protocols, these channels are capable of supporting both circuit switched voice communications and packet switched data communications.

The main processor 102 also interacts with additional subsystems such as a Random Access Memory (RAM) 106, a flash memory 108, a display 110, an auxiliary input/output (I/O) subsystem 112, a data port 114, a keyboard 116, a speaker 118, a microphone 120, short-range communications 122 and other device subsystems 124.

Some of the subsystems of the mobile device 100 perform communication-related functions, whereas other subsystems may provide "resident" or on-device functions. By way of example, the display 110 and the keyboard 116 may be used for both communication-related functions, such as entering a text message for transmission over the network 200, and device-resident functions such as a calculator or task list.

The mobile device 100 can send and receive communication signals over the wireless network 200 after required network registration or activation procedures have been completed. Network access is associated with a subscriber or user of the mobile device 100. To identify a subscriber, the mobile device 100 may use a subscriber module. Examples of such subscriber modules include a Subscriber Identity Module (SIM) developed for GSM networks, a Removable User Identity Module (RUIM) developed for CDMA networks and a Universal Subscriber Identity Module (USIM) developed for 3G networks such as UMTS. In the example shown, a SIM/RUIM/USIM 126 is to be inserted into a SIM/RUIM/USIM interface 128 in order to communicate with a network. The SIM/RUIM/USIM component 126 is one type of a conventional "smart card" that can be used to identify a subscriber of the mobile device 100 and to personalize the mobile device 100, among other things. Without the component 126, the mobile device 100 is not fully operational for communication with the wireless network 200. By inserting the SIM/RUIM/USIM 126 into the SIM/RUIM/USIM interface 128, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM/RUIM/USIM 126 includes a processor and memory for storing information. Once the SIM/RUIM/USIM 126 is inserted into the SIM/RUIM/USIM interface 128, it is coupled to the main processor 102. In order to identify the subscriber, the SIM/RUIM/USIM 126 can include some user parameters such as an International Mobile Subscriber Identity (IMSI). An advantage of using the SIM/RUIM/USIM 126 is that a subscriber is not necessarily bound by any single physical mobile device. The SIM/RUIM/USIM 126 may store additional subscriber information for a mobile device as well, including datebook (or calendar) information and recent call information. Alternatively, user identification information can also be programmed into the flash memory 108.

The mobile device 100 is a battery-powered device and includes a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the mobile device 100. Although current technology makes use of a battery, future technologies such as micro fuel cells may provide the power to the mobile device 100.

The mobile device 100 also includes an operating system 134 and software components 136 to 146 which are described in more detail below. The operating system 134 and the software components 136 to 146 that are executed by the main processor 102 are typically stored in a persistent store such as the flash memory 108, which may alternatively be a read-only memory (ROM) or similar storage element (not shown). Those skilled in the art will appreciate that portions of the operating system 134 and the software components 136 to 146, such as specific device applications, or parts thereof, may be temporarily loaded into a volatile store such as the RAM 106. Other software components can also be included, as is well known to those skilled in the art.

The subset of software applications 136 that control basic device operations, including data and voice communication applications, may be installed on the mobile device 100 during its manufacture. Other software applications include a message application 138 that can be any suitable software program that allows a user of the mobile device 100 to send and receive electronic messages. Various alternatives exist for the message application 138 as is well known to those skilled in the art. Messages that have been sent or received by the user are typically stored in the flash memory 108 of the mobile device 100 or some other suitable storage element in the mobile device 100. In at least some embodiments, some of the sent and received messages may be stored remotely from the device 100 such as in a data store of an associated host system that the mobile device 100 communicates with.

The software applications can further comprise a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the mobile device 100 is turned off or loses power.

The PIM 142 includes functionality for organizing and managing data items of interest to the user, such as, but not limited to, e-mail, contacts, calendar events, voice mails, appointments, and task items. A PIM application has the ability to send and receive data items via the wireless network 200. PIM data items may be seamlessly integrated, synchronized, and updated via the wireless network 200 with the mobile device subscriber's corresponding data items stored and/or associated with a host computer system. This functionality creates a mirrored host computer on the mobile device 100 with respect to such items. This can be particularly advantageous when the host computer system is the mobile device subscriber's office computer system.

The mobile device 100 may also comprise a connect module 144, and an IT policy module 146. The connect module 144 implements the communication protocols that are required for the mobile device 100 to communicate with the wireless infrastructure and any host system, such as an enterprise system, that the mobile device 100 is authorized to interface with.

The connect module 144 includes a set of APIs that can be integrated with the mobile device 100 to allow the mobile device 100 to use any number of services associated with the enterprise system. The connect module 144 allows the mobile device 100 to establish an end-to-end secure, authenticated communication pipe with the host system 250. A subset of applications for which access is provided by the connect module 144 can be used to pass IT policy commands from the host system to the mobile device 100. This can be done in a wireless or wired manner. These instructions can then be passed to the IT policy module 146 to modify the configuration of the device 100. Alternatively, in some cases, the IT policy update can also be done over a wired connection.

The IT policy module 146 receives IT policy data that encodes the IT policy. The IT policy module 146 then ensures that the IT policy data is authenticated by the mobile device 100. The IT policy data can then be stored in the flash memory 106 in its native form. After the IT policy data is stored, a global notification can be sent by the IT policy module 146 to all of the applications residing on the mobile device 100. Applications for which the IT policy may be applicable then respond by reading the IT policy data to look for IT policy rules that are applicable.

The IT policy module 146 can include a parser (not shown), which can be used by the applications to read the IT policy rules. In some cases, another module or application can provide the parser. Grouped IT policy rules, described in more detail below, are retrieved as byte streams, which are then sent (recursively, in a sense) into the parser to determine the values of each IT policy rule defined within the grouped IT policy rule. In at least some embodiments, the IT policy module 146 can determine which applications are affected by the IT policy data and send a notification to only those applications. In either of these cases, for applications that aren't running at the time of the notification, the applications can call the parser or the IT policy module 146 when they are executed to determine if there are any relevant IT policy rules in the newly received IT policy data.

All applications that support rules in the IT Policy are coded to know the type of data to expect. For example, the setting for the "Set Maximum Password Attempts" IT policy rule is known to be an integer, and therefore the value in the IT policy data that corresponds to this rule is interpreted as such.

After the IT policy rules have been applied to the applicable applications or configuration files, the IT policy module 146 sends an acknowledgement back to the host system to indicate that the IT policy data was received and successfully applied.

Other types of software applications or components 139 can also be installed on the mobile device 100. These software applications 139 can be pre-installed applications (i.e. other than message application 138) or third party applications, which are added after the manufacture of the mobile device 100. Examples of third party applications include games, calculators, utilities, etc.

The additional applications 139 can be loaded onto the mobile device 100 through at least one of the wireless network 200, the auxiliary I/O subsystem 112, the data port 114, the short-range communications subsystem 122, or any other suitable device subsystem 124. This flexibility in application installation increases the functionality of the mobile device 100 and may provide enhanced on-device functions, communication-related functions, or both. For example, secure communication applications may enable electronic commerce functions and other such financial transactions to be performed using the mobile device 100.

The data port 114 enables a subscriber to set preferences through an external device or software application and extends the capabilities of the mobile device 100 by providing for information or software downloads to the mobile device 100 other than through a wireless communication network. The alternate download path may, for example, be used to load an encryption key onto the mobile device 100 through a direct and thus reliable and trusted connection to provide secure device communication.

The data port 114 can be any suitable port that enables data communication between the mobile device 100 and another computing device. The data port 114 can be a serial or a parallel port. In some instances, the data port 114 can be a USB port that includes data lines for data transfer and a supply line that can provide a charging current to charge the battery 130 of the mobile device 100.

The short-range communications subsystem 122 provides for communication between the mobile device 100 and different systems or devices, without the use of the wireless network 200. For example, the subsystem 122 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download may be processed by the communication subsystem 104 and input to the main processor 102. The main processor 102 may then process the received signal for output to the display 110 or alternatively to the auxiliary I/O subsystem 112. A subscriber may also compose data items, such as e-mail messages, for example, using the keyboard 116 in conjunction with the display 110 and possibly the auxiliary I/O subsystem 112. The auxiliary subsystem 112 may comprise devices such as: a touch screen, mouse, track ball, infrared fingerprint detector, or a roller wheel with dynamic button pressing capability. The keyboard 116 is an alphanumeric keyboard and/or telephone-type keypad. However, other types of keyboards may also be used. A composed item may be transmitted over the wireless network 200 through the communication subsystem 104.

For voice communications, the overall operation of the mobile device 100 is substantially similar, except that the received signals are output to the speaker 118, and signals for transmission are generated by the microphone 120. Alternative voice or audio I/O subsystems, such as a voice message recording subsystem, can also be implemented on the mobile device 100. Although voice or audio signal output is accomplished primarily through the speaker 118, the display 110 can also be used to provide additional information such as the identity of a calling party, duration of a voice call, or other voice call related information.

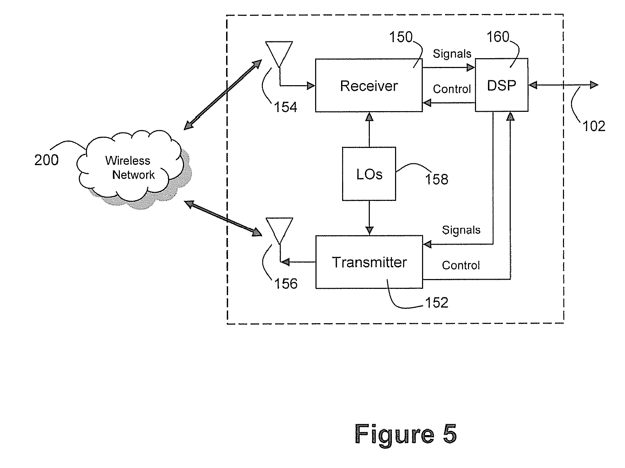

Referring now to Figure 5, an exemplary block diagram of the communication subsystem component 104 is shown. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the mobile device 100 is intended to operate. Thus, it should be understood that the design illustrated in Figure 5 serves only as one example.

Signals received by the antenna 154 through the wireless network 200 are input to the receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 150 and the transmitter 152 may be adaptively controlled through automatic gain control algorithms implemented in the DSP 160.

The wireless link between the mobile device 100 and the wireless network 200 can contain one or more different channels, typically different RF channels, and associated protocols used between the mobile device 100 and the wireless network 200. An RF channel is a limited resource that must be conserved, typically due to limits in overall bandwidth and limited battery power of the mobile device 100.

When the mobile device 100 is fully operational, the transmitter 152 is typically keyed or turned on only when it is transmitting to the wireless network 200 and is otherwise turned off to conserve resources. Similarly, the receiver 150 may be periodically turned off to conserve power until it is needed to receive signals or information (if at all) during designated time periods.

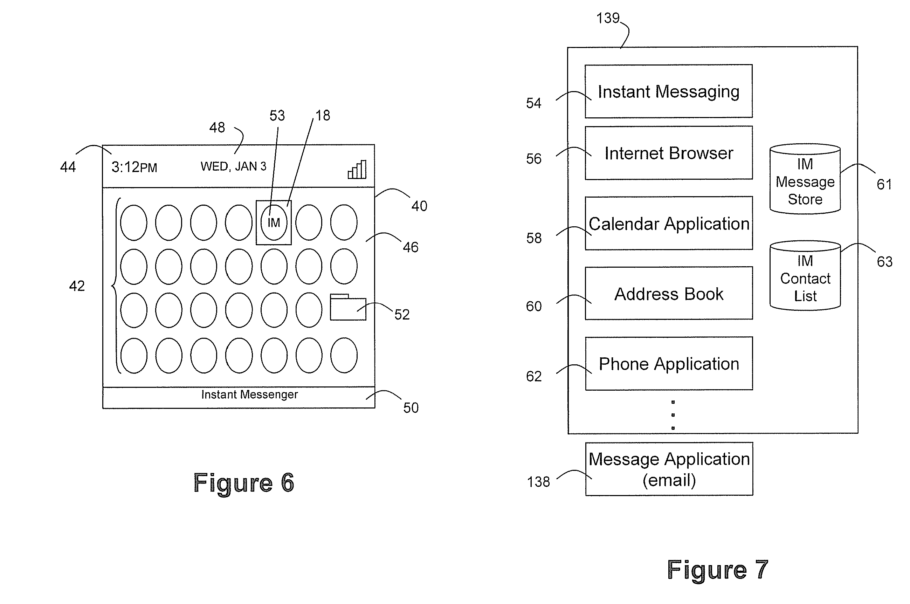

Turning now to Figure 6, the mobile device 100 may display a home screen 40, which may be the active screen when the mobile device 100 is powered up and may constitute the main ribbon application. The home screen 40 generally comprises a status region 44 and a theme background 46, which provides a graphical background for the display 12. The theme background 46 displays a series of icons 42 in a predefined arrangement on a graphical background. In some themes, the home screen 40 may limit the number icons 42 shown on the home screen 40 so as to not detract from the theme background 46, particularly where the background 46 is chosen for aesthetic reasons. The theme background 46 shown in Figure 6 provides a grid of icons. It will be appreciated that preferably several themes are available for the user to select and that any applicable arrangement may be used. One or more of the series of icons 42 is typically a folder 52 that itself is capable of organizing any number of applications therewithin.

The status region 44 in this embodiment comprises a date/time display 48. The theme background 46, in addition to a graphical background and the series of icons 42, also comprises a status bar 50. The status bar 50 provides information to the user based on the location of the selection cursor 18, e.g. by displaying a name for the icon 53 that is currently highlighted.

An application, such as an instant messaging application 54 (see also Figure 7) may be initiated (opened or viewed) from display 12 by highlighting a corresponding icon 53 using the positioning device 14 and providing a suitable user input to the mobile device 100. For example, instant messaging application 54 may be initiated by moving the positioning device 14 such that the icon 53 is highlighted by the selection box 18 as shown in Figure 6, and providing a selection input, e.g. by pressing the trackball 14b.

Figure 7 shows an example of the other software applications and components 139 that may be stored on and used with the mobile device 100. Only examples are shown in Figure 7 and such examples are not to be considered exhaustive. In this example, instant messaging 54, internet browser 56, calendar 58, address book 60 and phone 62 applications are shown to illustrate the various features that may be provided by the mobile device 100. Also shown in Figure 7 is the message application 138, which in the following will be referred to as an email application 138 for clarity. It will be appreciated that the various applications may operate independently or may utilize features of other applications. For example, the phone application 62 and email application 138 may use the address book 60 for contact details. The instant messaging application 54 comprises or otherwise has access to an instant messaging (IM) message store 61, which is used to store instant messages and instant messaging sessions or conversations comprising one or more messages exchanged with a particular correspondent or buddy. The instant messaging application 54 comprises or otherwise has access to an IM contact list 63 which may or may not be a subset of the contacts in the address book 60. The IM contact list 63 comprises the buddies with which the user of the mobile device 100 can engage in an instant messaging conversation.

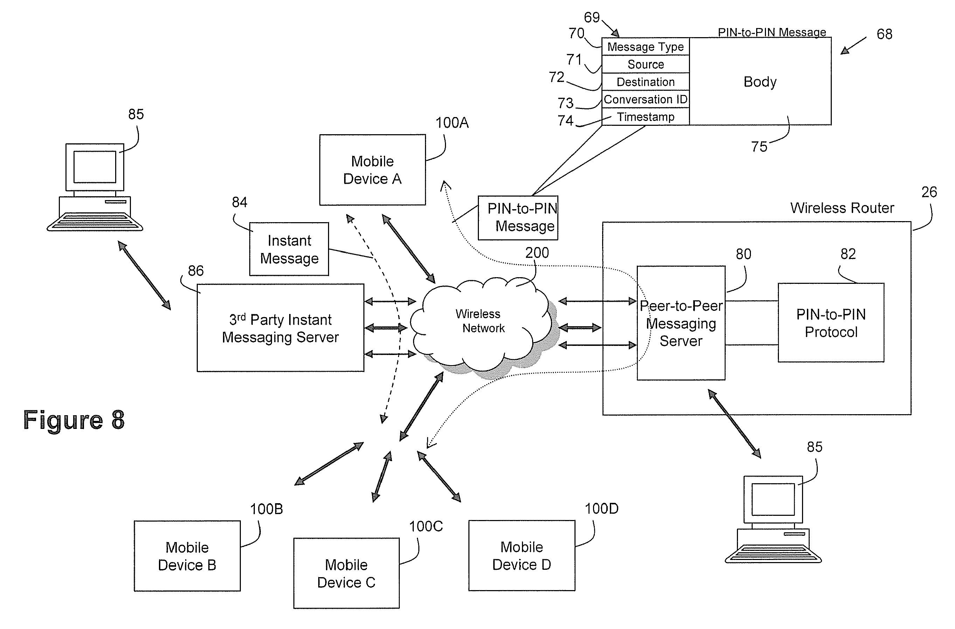

Turning now to Figure 8, a configuration suitable for a user of mobile device A, hereafter referred to as mobile device 100A, to conduct instant messaging with buddies included in their IM contact list 63 is shown. It can be seen in Figure 8 that two examples of instant messaging systems are shown. A personal identification number (PIN)-based messaging system is shown that utilizes the wireless router 26 and a 3^{rd} party instant messaging service is also shown that utilizes a 3^{rd} party instant messaging server 86 accessed by mobile device 100A through the network 200. As can be seen, the 3^{rd} party instant messaging server 86 may also communicate with desktop users 85 thus facilitating instant messaging between desktop users 85 and between a mobile device user 100 and a desktop user 100. Similarly, the PIN-based messaging system may also facilitate communications with desktop users 85.

In the embodiment illustrated in Figure 8, the PIN-based messaging system is implemented using a server-based communication infrastructure, such as one that provides email, SMS, voice, Internet and other communications. Particularly suitable for hosting a peer-to-peer messaging server 80, is the wireless router 26 used in systems such as those shown in Figure 1. In Figure 8, the wireless router 26 facilitates communications such as instant messaging between mobile device 100A and mobile devices for User B, User C and User D, denoted by 100B, 100C and 100D respectively. It will be appreciated that the number of users participating in the example shown in Figure 8 is for illustrative purposes only. Instant messaging is provided by the instant messaging program 54 stored on each mobile device 100A - 100D which can be initiated from the home screen 40, for example, by highlighting and selecting the instant messaging icon 53 as illustrated in Figure 6. The wireless router 26 routes messages between the mobile devices 100A-100D according to a PIN-to-PIN protocol 82.

A PIN-to-PIN based instant message is generally denoted by numeral 68 in Figure 8. In this embodiment, the message 68 is a PIN-based message. In a PIN-based messaging protocol 82, each message 68 has associated therewith a PIN corresponding to the mobile device 100 which has sent the message 68 (source) and includes a destination PIN identifying the intended recipient (destination). Further detail of an example structure for the messages 68 is also shown in Figure 8. Each message 68 generally comprises a body 75, which contains the content for the message 68 (e.g. text), and a header 69, which contains various fields used for transmitting and processing each message 68. In this example, the header 69 includes a message type field 70 to specify the type of transmission (e.g. PIN, SMS etc.), a source field 71 to specify the device address for the sender, a destination field 72 to specify the device address for the intended recipient, a conversation ID field 73 to identify which conversation thread the message 68 corresponds to (e.g. such that each message 68 is identified by the conversation in which it was sent), and a timestamp field 74 to indicate the time (and if desired, the date) at which the message 68 was sent by the designated sender.

It will be appreciated that other information or attributes may be included in the message 68, such as a subject field (not shown) to enable a subject for part or all of the conversation to be transported with the message 68 (e.g. to create new subjects, modify subjects, notify others of subjects, etc.). Although not shown in Figure 8, one or more tags can also be used to indicate to the instant messaging application 54, upon receipt of a message 68, that the message 68 has certain attributes such as a subject that is to be displayed, whether additional information is being transported (i.e. data or information in addition to the message content), or whether the message 68 is being used for some other purpose such as provisioning, synchronization, etc.

In general, in a PIN based messaging protocol 82, the sender of the message 68 knows the PIN of the intended recipient. This is preferably established when the two devices request to add each other to their respective contact or buddy lists. At the time of requesting new contacts, in traditional PIN-to-PIN protocols 82, the two respective PIN numbers may be exchanged via request e-mails which are configured to be intercepted by the respective instant messaging applications 54 so as to not appear in the message list or "inbox" of the user. In other embodiments, to avoid the exchange of email messages to add a buddy to the IM contact list 63, a global address list (GAL) application (at the host system 250 - not shown) may instead be accessed in order to obtain the PIN for the intended recipient directly. Alternatively, the user may simply ask for the PIN from another user and enter it manually.

It can be seen in the example shown in Figure 8 that mobile device 100A can communicate directly with any of the mobile devices 100B-100D through the peer-to-peer messaging server 80 as indicated by the short-dashed line. Instant messaging can also be accomplished through the 3^{rd} party IM server 86 by sending 3^{rd} party based instant messages 84 over the wireless network 200 as indicated by the long-dashed line.

When conducting a PIN-to-PIN instant messaging session according to the embodiment shown in Figure 8, the mobile devices 100A-100D can communicate directly with the wireless router 26 in a client based exchange where, similar to other peer-to-peer programs, an intermediate server is not required. A message 68 sent by one mobile device 100 is received by the wireless router 26, which obtains the PIN number for the intended recipient from information associated with the message 324 (e.g. a data log) or from the message 324 itself. Upon obtaining the recipient's PIN according to the PIN-to-PIN protocol 82, the wireless router 26 then routes the message 68 to the recipient associated with the mobile device 100 having such PIN. The wireless router 26 typically also provides a delivery confirmation to the original sender, which may or may not be displayed to the user. The destination device can also provide such delivery information. The wireless router 26 should be capable of routing messages 68 reliably and hold onto the messages 68 until they are successfully delivered. Alternatively, if delivery cannot be made after a certain timeout period, the wireless router 26 may provide a response indicating a failed delivery. The wireless router 26 may choose to expire a message 68 if a certain waiting period lapses.

It will also be appreciated that, as noted above, instant messaging can be implemented using any other suitable protocol such as SMS. In SMS, a message is transmitted to an SMC center (SMSC) within a carrier's infrastructure, and then delivered to the mobile phone number of the destination device. The SMSC would also be configured to hold onto messages and deliver then once the destination device is within coverage.

When conducting an instant messaging session using a 3^{rd} party IM application, access to the 3^{rd} party IM server 86 is first established and instant messages 84 exchanged over the wireless network 200 according to the appropriate protocol used by the 3^{rd} party. It will be appreciated that the principles discussed below are equally applicable to both PIN-to-PIN messaging and other Internet service-based instant messaging systems hosted by such 3^{rd} parties.

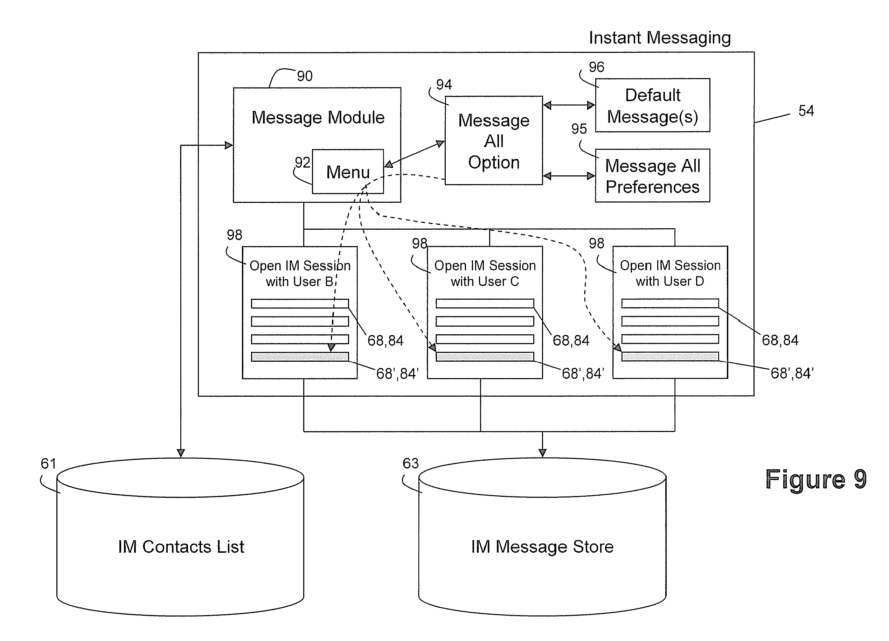

Turning now to Figure 9, further detail of the instant messaging application 54 is shown to illustrate implementation of the Message All option 94 introduced above. As seen in Figure 9, the instant messaging application 54 comprises a message module 90, which generally represents any computer executable instructions implemented by the instant messaging application 54 for enabling a user to engage in an instant messaging session or conversation 98 with a selected contact from the IM contacts list 61 or to pick one of the recently stored messages/conversations used previously. The message module 90 comprises or otherwise facilitates or controls the operation of a menu 92 that is accessible from within the instant messaging application 54, e.g. by selecting the menu button 24. Also shown in Figure 9 is the Message All option 94, which can be initiated through the menu 92 as shown conceptually in the drawing. The Message All option 94 comprises or has access to one or more default messages 96 that can be used rather than requiring the user to type in a message. The Message All option 94 also comprises or has access to one or more preferences 95 that enable a user to customize features of the Message All option 94.

Each open or active conversation 98 shown in Figure 9 is associated with a particular contact or buddy from the IM contacts list 61. The content of each conversation 98 is stored in the IM message store 63 on an ongoing basis such that the conversation 98 may be closed and accessed later to resume the exchange with the particular user. For illustrative purposes only, three active conversations 98 are shown in Figure 9, namely between User A and User B, between User A and User C, and between User A and User D. Each conversation 98 comprises one or more messages, in this example either a PIN-to-PIN message 68 or a 3^{rd} party based instant message 84, depending on which instant messaging system corresponds to the instant messaging application 54. The highlighted messages 68', 84' represent a common message sent in each conversation by the Message All option 94 as will be explained in greater detail below. The dashed lines in Figure 9 illustrate the placement of the common message 68', 84' by the Message All option 94, into each of the active conversations 98 concurrently.

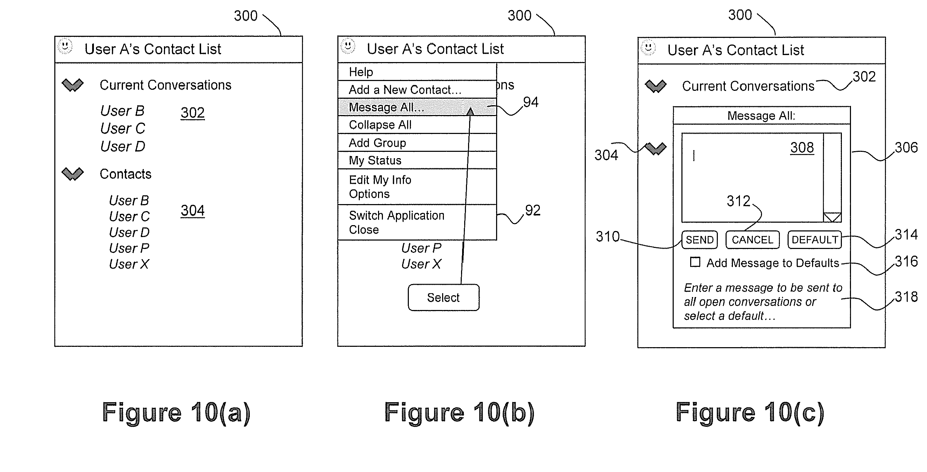

As discussed above, the instant messaging application 54 may be initiated by highlighting a corresponding icon 53 as shown in Figure 6 using a suitable positioning device such as the trackball 14b and providing another appropriate input such as pressing the trackball 14b. Figure 10(a) illustrates an exemplary user interface (UI) for a main instant messaging (IM) screen 300. The main IM screen 300 comprises a first list 302 of current or open or active or pending conversations 98, which in this example shows the conversations with Users B, C and D seen in Figure 9. The main IM screen 300 also comprises a second list 304 of contacts, which are stored in the IM contacts list 63. It will be appreciated that the current conversations 98 may comprise others that are not necessarily in the second list 304. From the main IM screen 300, the menu 92 may be initiated, e.g. by selecting the menu button 24. An example UI showing the initiation of the menu 92 is shown in Figure 10(b).

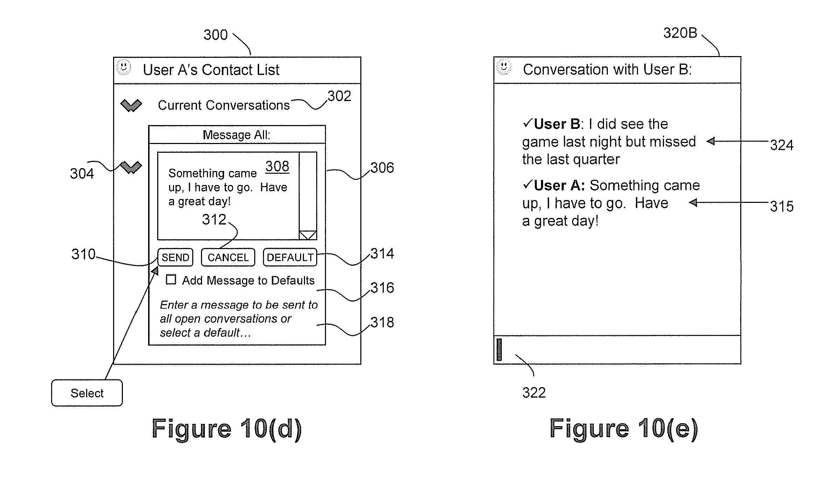

Of the various options listed as menu items in the menu 92 is the Message All option 94. Upon detecting selection of the Message All option 94 as shown in Figure 10(b) a Message All window 306 is initiated and in this example displayed within the main IM screen 300 as shown in Figure 10(c). The Message All window 306 comprises a text entry portion 308, which enables the provision of a common message, in this example by enabling the user to enter a custom message to be sent to each of User B, User C and User D at the same time using the Message All option 94. The Message All window 306 also comprises a Send button 310 to allow the user to confirm and send the message entered or provisioned in portion 308, a Cancel button 312 to abort the current use of the Message All option 94, and a Default button 314. The Default button 314 enables the user to choose from a list of one or more stored default messages as explained below. An Add Message checkbox 316 enables the user to add the currently entered text (in portion 308) to the list of defaults for possible later use. Below the checkbox 316 is a help message 318 instructing the user how to use the Message All option 94. Figure 10(d) illustrates an example message entered by the user in portion 308, namely the message: "Something came up, I have to go. Have a great day!"

By selecting the Send button 310 as shown in Figure 10(d), the message showing in portion 308 is sent to each of User B, User C and User D as shown in each of the conversation windows 300B, 300C and 300D seen in Figures 10(e) through 10(g). In this way, User A has effectively notified each correspondent with what appears to be a personal message, without having to open each conversation window and type a separate message to each correspondent. It can be seen that when User A needs to leave unexpectedly or needs to attend to an emergency, the Message All option 94 allows the user to perform a blanket notification with a minimum of steps and in a minimum amount of time.

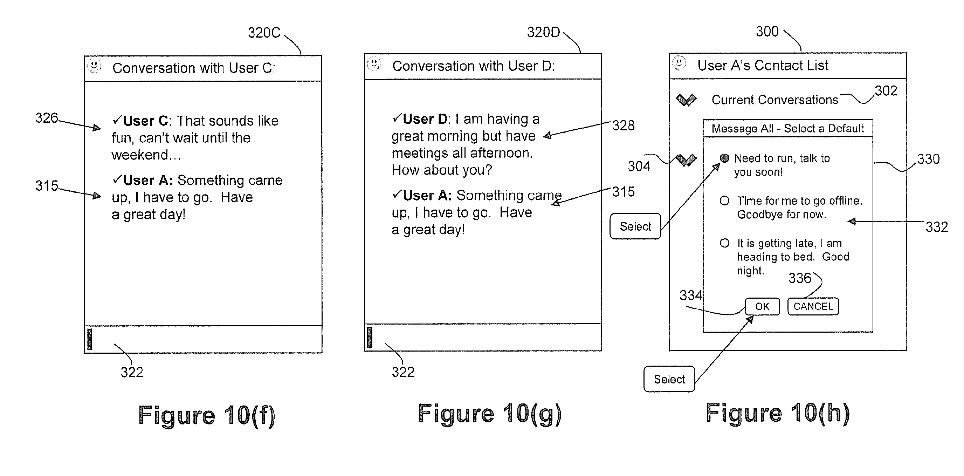

Turning now to Figure 10(h), the user can further minimize the time taken to send a common message to multiple users by taking advantage of pre-stored default messages 332 displayed to the user in a defaults window 330, which is initiated by selecting the Default button 314. The default messages 332 can be standard defaults which are preloaded with the instant messaging application 54 or can be those added by selecting the checkbox 316 or both. In Figure 10(h), three examples are shown, each of which can be selected using a suitable selection mechanism such as the radio buttons shown in Figure 10(h) to provision a selected common message for the Message All option 94. In this example, User A selects the first default message 332, namely: "Need to run, talk to you soon!" and by selecting the OK button 334 as seen in Figure 10(h), the selected default message is provisioned and then sent to all open or active conversations, similar to what is shown in Figures 10(e) to 10(g) for the first example. A Cancel button 336 enables User A to abort the selection of a default message 332, e.g. if none are appropriate for the current situation, in which case focus may return to the Message All window 306.

As shown in Figure 9, the Message All option 94 may utilize a set of one or more preferences 95 for customizing the features of the Message All option 94. Figure 11(a) illustrates an exemplary Message All window 306' that is similar to the window 306 shown in Figure 10(c) with an additional Preferences link 340 to enable a user to initiate and access a Message All preferences window 342 shown in Figure 11(b). The preferences window 342 in this example enables the user to select between a default option 344 of sending the common message 315 to all active conversations as illustrated in the example shown in Figure 10, and a custom option 346 of sending the common message 315 to only the recent conversations, e.g. using a set of radio buttons as shown in Figure 11(b). The custom option 346, if selected, enables a user to specify a time window since when a conversation has last been active in order to be included in the delivery of the common message 315. The desired time window can be specified by entering a number of minutes in a time entry box 354. It will be appreciated that a drop-down list of options or other similar mechanism can also be used to enable the user to select/specify the time window. Using the custom option 346 and specifying the time window allows the user to notify multiple contacts at the same time without sending unnecessary messages to active conversations that are not currently active so that only conversations having been active within the predefined time window are messaged. Use of the custom option 346 thus avoids populating conversations that are inactive, e.g. for 1 week, with multiple messages related to the user's presence during a time wherein they were not actively corresponding.

The preferences window 342 may also include other options to enable the user to further customize the Message All option 94. As shown in Figure 11(b), a user may be provided with a Never option 350 to populate a list 356 of users to which they will never send the common message 315. The Never option 350 can be used to disable or inhibit the Message All option 94 for certain contacts, e.g. for a casual conversation wherein presence is not necessarily important. The user may also be provided with an Always option 352 to populate a list 358 of users to which they will always send the common message 315, which may be used to override the time window if desired. The Always option 352 can be used in conjunction with the custom option 346 such that only conversations active within the specified time window are provided with the common message 315, with the exception of those that the user believes should always be notified. The Always option 352 is beneficial for notifying certain important contacts (e.g. spouse) of the user's availability, even when the conversation is not deemed "active" according to the custom option 346.

It may be noted that the Message All option 94 can be used for notifying multiple contacts of situations where the user is becoming unavailable (e.g. as exemplified in Figure 10) as well as situations where the user is coming back online. Therefore, the defaults 96 and preferences 95 can be provided with options for both types of messages. For example, the defaults window 330 shown in Figure 10(h) can be tabbed or otherwise structured to provide a list of defaults for coming back online (e.g. "I am back now, where were we?") in addition to the defaults for going offline as shown. In other embodiments, the defaults 96 and preferences 95 are linked to allow the user to further customize the defaults 96 and to allow the preferences window 342 to be accessed from the defaults window 330 and vice versa.

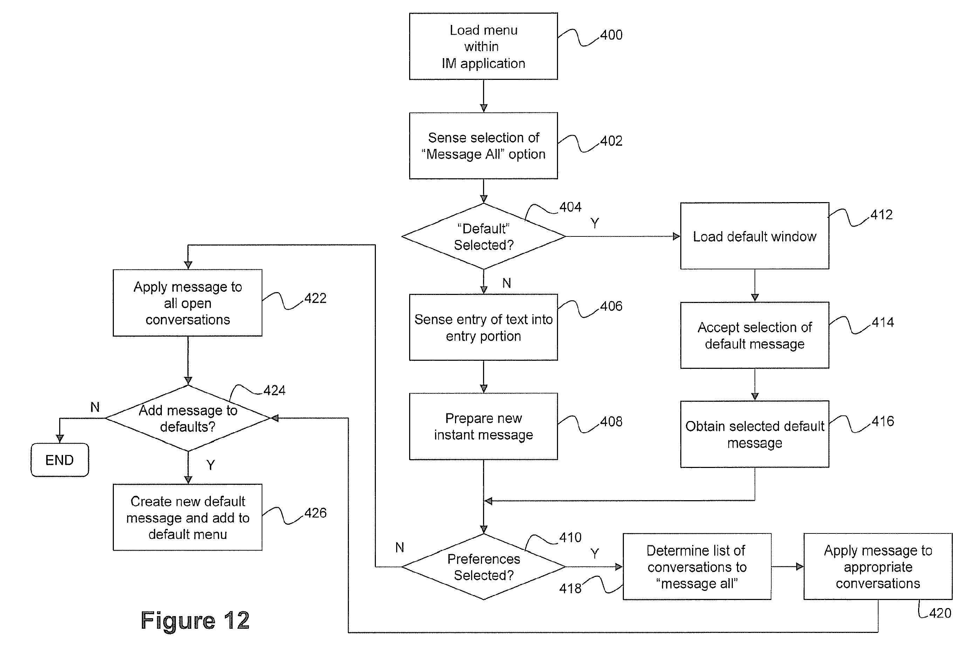

Turning now to Figure 12, a flow diagram illustrating computer executable operations that may be performed by the instant messaging application 54 (e.g. using the message module 90) is provided. At 400, the menu 92 is displayed, e.g. by selecting the menu button 24 while in the main IM screen 300. Selection of the Message All option 94 sensed at 402 causes the Message All window 306 to be loaded as shown in Figure 10(c). If selection of the Default button 314 is sensed at 404, the default window 330 is loaded at 412. Otherwise, the entry of text into portion 308 is sensed at 406 thus enabling User A to construct a common message. Upon selection of the Send button 310, a new instant message is prepared at 408. When the default window 330 is loaded at 412, the selection of one of the defaults messages 332 may then be accepted at 414 (e.g. by sensing the selection of a radio button and then the selection of the OK button 334) at which time the selected default message 332 is obtained at 416. Once either the default message is selected at 416 or the new instant message is prepared at 408, the Message All option 94 may then determine at 410 if any preferences 95 have be selected. If so, the Message All option 94 determines a list of conversations to send the common message 315 at 418, e.g. whether to send to only those conversations active within time window, removal of those specified in Never option 350, addition (if necessary) of those specified in Always option 352, etc. The common message is then applied to the appropriate conversations at 420. If no preferences 95 have been specified, e.g. the default option 344 has been selected and there are no contacts lists in the Never option list 356, the common message 315 is applied to all active conversations at 422.

It may be noted that in 420 and 422, the Message All option 94 may refer to a list of open or active or available conversations maintained by the IM application 54 and execute a loop iterating through all of the appropriate conversations and sending the common message 315 to each such conversation. This would involve iterating through all open conversations if 422 is executed and would involve iterating through the list of conversations determined at 418.

Once a common message has been sent at 420 or 422 (i.e. unless the Cancel button 312 is selected), the Message All option 94 may then determine at 418 if the checkbox 316 has been selected indicating that a message, if entered in portion 308, is to be added to the list of default messages 332. If yes, a new default message 332 may be created at 420 and added to the list of default messages 332 for later use.

Although the above examples illustrate sending a common message to all active conversations in the same instant messaging application 54, it will be appreciated that the same common message may be shared amongst multiple IM clients. For example, an independent module may be used to initiate a common message across all conversations in all IM clients. Alternatively, each instant messaging application 54 may communicate with other IM clients to pass along the common message, with each subsequent IM client having its own module for sending a common message within its control.

It can therefore be seen that the user may be presented with a Message All option 94 in a menu 92 that, when selected, enables the user to enter a common message that they wish to send to all active conversations, e.g. to indicate that they are leaving the conversation. The common message, once entered is then sent to all active conversations without requiring each conversation to be accessed by the user. The user may also be presented with the opportunity to choose from one or more default messages in the Message All option 94 to further speed up the process, if one of such default messages is applicable to the current situation. It will be understood that the Message All option 94 may also exist outside of the instant messaging clients, e.g. triggered by a button or icon etc. on the mobile device 100.

It will be appreciated that the particular options, outcomes, applications, screen shots and icons shown in the figures and described above are for illustrative purposes only and many other variations can be used according to the principles described.

Although the above has been described with reference to certain specific embodiments, various modifications thereof will be apparent to those skilled in the art as outlined in the appended claims.

## Claims

1. A computer implemented method for updating instant messaging conversations comprising the steps of:
- upon receiving a first input at a computing device, providing an option for sending a common message to a plurality of active conversations;
- upon receiving a second input indicating selection of said option, enabling the provision of said common message; and
- upon receiving a third input confirming said common message, sending said common message to said plurality of active conversations.

2. The method according to claim 1 wherein said provision of said common message comprises enabling entry of text to compose said common message.

3. The method according to claim 1 or claim 2 wherein said provision of said common message comprises enabling selection of one or more default messages to be used as said common message.

4. The method according to claim 2 or claim 3 when dependent on claim 2 wherein upon said common message being composed, said method further comprises enabling said text to be saved as a default message.

5. The method according to any one of the preceding claims wherein said plurality of active conversations comprises all active conversations.

6. The method according to any one of claims 1 to 4 wherein said plurality of active conversations comprises only conversations that have been active within a predefined time window.

7. The method according to claim 6 further comprising providing an option to override said time window for one or more specified contacts.

8. The method according to any one of the preceding claims further comprising providing an option to inhibit said common message from being sent to one or more specified contacts.

9. The method according to any one of the preceding claims wherein sending said common message comprises referencing a list of active conversations maintained by an instant messaging application and sending said common message by iterating through said plurality of active conversations.

10. A computer readable medium comprising computer executable instructions that when executed by a processor of a computing device cause said computing device to perform the steps of the method according to any of the preceding claims.

11. A mobile device comprising a display, one or more input mechanisms, a processor, a communication sub-system for engaging in instant messaging, and at least one memory, one of said at least one memory storing computer executable instructions for causing said processor to perform the steps of the method according to any one of claims 1 to 9.

## Amended claims

### Amended claims in accordance with Rule 137(2) EPC.

**1.** A computer implemented method for updating instant messaging conversations comprising the steps of:
- receiving a first input at a computing device (94) indicating selection of an option for sending common messages (68', 84') to a plurality of active instant messaging conversations;
- enabling the preparation or selection (306) of a common message (68', 84'); and
- upon receiving a second input confirming said common message (68',84'), sending said common message (68', 84') to said plurality of active instant messaging conversations.

**2.** The method according to claim 1 wherein said preparation of said common message (68', 84') comprises enabling entry of text to compose said common message (68', 84').

**3.** The method according to claim 1 or claim 2 wherein said selection of said common message (68', 84') comprises enabling selection of one or more default messages to be used as said common message (68', 84').

**4.** The method according to claim 2 or claim 3 when dependent on claim 2 wherein upon said common message (68', 84') being composed, said method further comprises enabling said text to be saved as a default message (96).

**5.** The method according to any one of the preceding claims wherein said plurality of active conversations comprises all active conversations.

**6.** The method according to any one of claims 1 to 4 wherein said plurality of active conversations comprises only conversations that have been active within a predefined time window.

**7.** The method according to claim 6 further comprising providing an option to override said time window for one or more specified contacts.

**8.** The method according to any one of the preceding claims further comprising providing an option to inhibit said common message (68', 84') from being sent to one or more specified contacts.

**9.** The method according to any one of the preceding claims wherein sending said common message (68', 84') comprises referencing a list of active conversations maintained by an instant messaging application and sending said common message by iterating through said plurality of active conversations.

**10.** A computer readable medium comprising computer executable instructions that when executed by a processor (102) of a computing device cause said computing device to perform the steps of the method according to any of the preceding claims.

**11.** A mobile device (100) comprising a display (12), one or more input mechanisms, a processor, a communication sub-system for engaging in instant messaging, and at least one memory (106), one of said at least one memory (106) storing computer executable instructions for causing said processor to perform the steps of the method according to any one of claims 1 to 9.
